# EUROPÄISCHE PATENTSCHRIFT

(11) **EP 3 793 218 B1**
(45) Veröffentlichungstag und Bekanntmachung des Hinweises auf die Patenterteilung: **26.04.2023**
(21) Anmeldenummer: 20192180.6
(22) Anmeldetag: 21.08.2020
(51) Int. Cl.: H04R 25/00

(54) **VERFAHREN ZUM BETRIEB EINES HÖRGERÄTS SOWIE HÖRGERÄT**
HEARING DEVICE AND METHOD FOR OPERATING A HEARING DEVICE
PROCÉDÉ DE FONCTIONNEMENT D'UN APPAREIL AUDITIF AINSI QU'APPAREIL AUDITIF

(30) Priorität: 11.09.2019 DE 102019213809
(43) Veröffentlichungstag der Anmeldung: 17.03.2021
(73) Patentinhaber: Sivantos Pte. Ltd., Singapore 539775 (SG)
(72) Erfinder: GÖKAY, Umut, 53639 Königswinter (DE); NAUMANN, Frank, 91088 Bubenreuth (DE); PUDER, Henning, 91058 Erlangen (DE)
(74) Vertreter: FDST Patentanwälte

(56) Entgegenhaltungen:
- DE-A1-102009 019 594
- US-A1- 2014 257 799
- US-A1- 2016 127 829

## Beschreibung

Die Erfindung betrifft ein Verfahren zum Betrieb eines Hörgeräts sowie ein entsprechendes Hörgerät.

Ein Hörgerät dient der Wiedergabe von Geräuschen an einen Nutzer des Hörgeräts. Der Nutzer trägt das Hörgerät hierzu am oder im Ohr. Zur Ausgabe von Geräuschen weist das Hörgerät einen Hörer auf. Das Hörgerät weist zudem in manchen Ausgestaltungen wenigstens ein Mikrofon auf, um Geräusche aus der Umgebung aufzunehmen und diese dann an den Nutzer auszugeben. Die Geräusche werden dabei von dem Hörgerät typischerweise zusätzlich modifiziert, z.B. um einen Hörverlust des Nutzers auszugleichen. Allgemein werden unter einem Hörgerät vorliegend aber nicht lediglich Hörgeräte für hörgeschädigte Nutzer verstanden, sondern auch Kopfhörer und dergleichen.

Ein Hörgerät kann beispielsweise eine aktive Störgeräuschunterdrückung, kurz ANC (active noise cancellation) aufweisen, mittels welcher Umgebungsgeräusche unterdrückt werden, sodass der Nutzer des Hörgeräts seine Umgebung leiser wahrnimmt, als diese tatsächlich ist. Dies führt jedoch regelmäßig dazu, dass der Nutzer beim Sprechen auch seine Sprachlautstärke entsprechend gering wählt, sodass er oder sie für Gesprächspartner schlechter zu verstehen ist, gerade auch wegen der zusätzlichen Umgebungsgeräusche. Ein ähnlicher Effekt kann sich auch bei einem Hörgerät mit Beamformer ergeben, wenn Umgebungsgeräusche für den Nutzer durch eine sehr enge Fokussierung des Beamformers ausgeblendet werden.

Die US 2016/127829 A1 beschreibt die Reduzierung von Eigenstimmenokklusion in einem Headset.

Die US 2014/257799 A1 beschreibt ein Spracheingabegerät, bei welchem die Lautstärke eines Spracheingabesignals bestimmt wird und mit einem Grenzwert verglichen wird. Das Spracheingabesignal wird selektiv ausgegeben in Kombination mit anderen Schallsignalen.

Vor diesem Hintergrund ist es eine Aufgabe der Erfindung, die Verständlichkeit eines Nutzers eines Hörgeräts, welches eine Geräuschunterdrückung aufweist, besonders in lauten Umgebungen zu verbessern. Hierzu sollen ein verbessertes Verfahren zum Betrieb eines Hörgeräts sowie ein entsprechendes Hörgerät angegeben werden.

Die Aufgabe wird erfindungsgemäß gelöst durch ein Verfahren mit den Merkmalen gemäß Anspruch 1 sowie durch ein Hörgerät mit den Merkmalen gemäß Anspruch 13. Vorteilhafte Ausgestaltungen, Weiterbildungen und Varianten sind Gegenstand der Unteransprüche. Dabei gelten die Ausführungen im Zusammenhang mit dem Verfahren sinngemäß auch für das Hörgerät und umgekehrt.

Das Verfahren dient zum Betrieb eines Hörgeräts. Das Hörgerät wird zu einem gegebenen Zeitpunkt in einer bestimmten Umgebung betrieben, welche auch als aktuelle Umgebung bezeichnet wird. Diese Umgebung ist vorrangig charakterisiert durch Umgebungsgeräusche, d.h. die Geräusche im Umfeld des Nutzers, z.B. Hintergrundgeräusch, andere Menschen, Maschinen- oder Anlagengeräusche und dergleichen, speziell jedoch möglicherweise auch Störgeräusche (Englisch: noise). Jegliche Geräusche werden auch als Schallsignale bezeichnet. Zur Ausgabe von ggf. modifizierten Umgebungsgeräuschen an den Nutzer weist das Hörgerät einen Hörer auf. Der Hörer ist bei bestimmungsgemäßer Verwendung beispielsweise in ein Ohr des Nutzers eingesetzt oder wird am oder hinter dem Ohr getragen, wobei dann die ausgegebenen Geräusche z.B. über einen Schallschlauch des Hörgeräts in das Ohr geleitet werden.

Vorliegend ist eine Geräuschunterdrückung des Hörgeräts aktiviert, sodass Umgebungsgeräusche, speziell Störgeräusche, für einen Nutzer des Hörgeräts reduziert werden, d.h. deren Pegel wird verringert. Die Umgebungsgeräusche gelangen beispielsweise am Hörgerät vorbei in den Gehörgang des Nutzers, speziell an einem Ohrstück des Hörgeräts vorbei, und werden daher prinzipbedingt nicht vom Hörgerät aufgenommen und wieder ausgegeben, sondern umgehen das Hörgerät. Das Hörgerät weist demnach eine Geräuschunterdrückung auf, welche zudem zweckmäßigerweise ein- und ausschaltbar ist und je nach Bedarf automatisch oder manuell vom Nutzer insbesondere bei Vorliegen von Störgeräuschen aktivierbar ist oder aktiviert wird. Die Geräuschunterdrückung unterscheidet vorzugsweise zwischen Störgeräuschen, beispielsweise Hintergrundgeräuschen, Rauschen und dergleichen, und Nutzgeräuschen, beispielsweise Sprache oder Musik, und ist derart ausgebildet, dass Störgeräusche gegenüber Nutzgeräuschen reduziert werden.

Im Rahmen des Verfahrens wird für die aktuelle Umgebung ein Sollwert für die Sprachlautstärke des Nutzers bestimmt. Der Sollwert wird auch als Sollautstärke bezeichnet und gibt denjenigen Pegel an, welcher in der aktuellen Umgebung vom Nutzer vorzugsweise erreicht wird, um eine ausreichende Verständlichkeit zu gewährleisten, insbesondere für andere Personen in der Umgebung und speziell für Gesprächspartner des Nutzers. Der Sollwert, welcher in einer bestimmten Umgebung ausgewählt und verwendet wird, wird entweder im Rahmen des Verfahrens ermittelt oder außerhalb des Verfahrens in einem separaten Kalibrierungsverfahren und dann z.B. in einem Speicher des Hörgeräts gespeichert und vom Hörgerät bedarfsweise abgerufen. Der Sollwert ist vorzugsweise nutzerspezifisch und wird dann individuell für den entsprechenden Nutzer bestimmt, sodass sich für unterschiedliche Nutzer gegebenenfalls unterschiedliche Sollwerte ergeben.

Weiter wird bei dem Verfahren ein Istwert für die Sprachlautstärke, d.h. eine Istlautstärke, des Nutzers gemessen. Hierzu wird ein Mikrofon verwendet, welches insbesondere ein Teil des Hörgeräts ist. Mit anderen Worten: die Sprache des Nutzers wird mit dem Mikrofon aufgenommen und anschließend wird deren Pegel gemessen. Der Istwert gibt somit insgesamt an, wie laut der Nutzer tatsächlich spricht.

Falls der Istwert geringer ist als der Sollwert, wird von dem Hörgerät eine Maßnahme durchgeführt, um den Nutzer zu veranlassen, lauter zu sprechen. Dabei bleibt es allerdings grundsätzlich dem Nutzer selbst überlassen, auf die Maßnahme auch entsprechend zu reagieren, also tatsächlich auch lauter zu sprechen und dadurch den Istwert an den Sollwert anzupassen. Ausreichend ist zunächst, dass die Maßnahme grundsätzlich geeignet ist, den Nutzer bewusst oder unbewusst zu veranlassen, seine oder ihre Sprachlautstärke relativ zur aktuellen Sprachlautstärke zu erhöhen. Wesentlich für das Verfahren ist demnach, dass ein zu leises Sprechen des Nutzers erkannt wird und das Hörgerät hierauf reagiert, wohingegen die konkrete Maßnahme als Reaktion auf das zu leise Sprechen zunächst nicht von Bedeutung ist.

Ein Kerngedanke der Erfindung besteht entsprechend insbesondere darin, zunächst durch einen Vergleich von Istwert und Sollwert festzustellen, ob der Nutzer des Hörgeräts zu leise für die aktuelle Umgebung spricht. Falls dies der Fall ist, wird daraufhin versucht, den Nutzer durch eine geeignete Maßnahme dazu zu veranlassen, lauter zu sprechen. Dadurch wird der Effekt einer verringerten Sprachlautstärke aufgrund einer Geräuschunterdrückung vorteilhaft wenigstens teilweise ausgeglichen. Dadurch wird die Verständlichkeit des Nutzers für dessen Gesprächspartner in besonders lauten Umgebungen deutlich verbessert, da die Sprachlautstärke des Nutzers trotz der Geräuschunterdrückung optimal an die aktuelle Umgebung angepasst ist. Die Anwendung des Verfahrens ist speziell bei eingeschalteter Geräuschunterdrückung sinnvoll, da hier der Effekt des leiseren Sprechens überwiegend auftritt. Die Anpassung der Sprachlautstärke nimmt der Nutzer selbst vor, entweder bewusst oder unbewusst, d.h. das Hörgerät selbst trägt nicht direkt zur Erhöhung der Sprachlautstärke bei, sondern lediglich indirekt, indem es durch die Maßnahme den Nutzer zu einer solchen Erhöhung der Sprachlautstärke veranlasst. Hierzu sind grundsätzlich verschiedene Maßnahmen geeignet, von welchen einige besonders bevorzugte im Weiteren noch genauer beschrieben werden.

Grundsätzlich umfasst das Verfahren somit drei Schritte. In einem ersten Schritt wird der Sollwert bestimmt, d.h. die aktuelle Umgebung des Nutzers wird untersucht und es wird ermittelt welche Sprachlautstärke des Nutzers notwendig ist, um diesen in der aktuellen Umgebung verständlich zu machen. Mit anderen Worten: es wird eine Umgebungsuntersuchung durchgeführt, mit dem Ziel, eine Solllautstärke für den Nutzer zu bestimmen. Hierbei wird in einer geeigneten Ausgestaltung die Lautstärke von Umgebungsgeräuschen, speziell vorzugsweise Störgeräuschen, gemessen und dann berücksichtigt. Mit anderen Worten: der Pegel der Umgebungsgeräusche wird zur Charakterisierung der aktuellen Umgebung verwendet. In einer besonders geeigneten Ausgestaltung wird hierzu das Signal-zu-Rausch-Verhältnis, kurz SNR, der Stimme des Nutzers zu den Umgebungsgeräuschen gemessen. Das SNR gibt dann also die Lautstärke der Umgebungsgeräusche relativ zur Sprachlautstärke des Nutzers an. Alternativ oder zusätzlich ist auch eine Ausgestaltung geeignet, bei welcher die Umgebung mittels eines Klassifikators klassifiziert wird, d.h. einer Klasse zugewiesen wird, und der Sollwert dann bestimmt wird, indem dieser abhängig von der Klasse ausgewählt wird.

In einem zweiten Schritt wird die aktuelle Sprachlautstärke des Nutzers bestimmt, d.h. der Istwert. Hierbei wird zweckmäßigerweise eine Eigenstimmenerkennung, kurv OVD (own voice detection) verwendet, d.h. mittels einer Eigenstimmenerkennung wird gezielt die eigene Stimme des Nutzers isoliert und dann deren Lautstärke, also die Sprachlautstärke besonders zuverlässig bestimmt. Die Eigenstimmenerkennung ist insbesondere ein Teil des Hörgeräts. Der erste und der zweite Schritt können in beliebiger Reihenfolge und auch gleichzeitig ausgeführt werden sowie jeweils entweder einmalig oder wiederkehrend.

In einem dritten Schritt wird abhängig dem Istwert und dem Sollwert eine Maßnahme durchgeführt, welche den Nutzer veranlasst, genauer gesagt: veranlassen soll, die Istlautstärke zu erhöhen, um sich der Solllautstärke anzunähern oder diese zu erreichen. Insbesondere wird hierzu die Differenz zwischen Sollwert und Istwert gebildet und dann abhängig von dieser Differenz die Maßnahme veranlasst oder nicht. Demnach ist sozusagen eine Regelung realisiert, bei welcher die Sprachlautstärke des Nutzers eine Regelgröße ist und bei welcher durch die Maßnahme abhängig von der Differenz zwischen Ist- und Solllautstärke eine Stellgrö-βe ausgegeben wird, um den Nutzer und somit die Regelgröße zu beeinflussen.

Das Verfahren wird vorzugsweise in einer Gesprächssituation durchgeführt, bei welcher der Nutzer mit einem oder mehreren anderen Personen abwechselnd spricht. In denjenigen Phasen, in welchen der Nutzer selbst spricht, wird dann zweckmäßigerweise der Istwert gemessen und dann sofort oder später mit dem Sollwert verglichen, um ggf. die Maßnahme auszulösen.

In einer besonders bevorzugten Ausgestaltung ist die Geräuschunterdrückung eine aktive Störgeräuschunterdrückung, kurz auch als ANC (active noise cancellation) bezeichnet. Bei eingeschalteter aktiver Störgeräuschunterdrückung werden die Umgebungsgeräusche mit einem Mikrofon des Hörgeräts aufgenommen und von der Geräuschunterdrückung durch zusätzliche Gegengeräusche derart kompensiert, dass die Umgebungsgeräusche in der Wahrnehmung des Nutzers reduziert sind, also einen verringerten Pegel aufweisen. Zweckmäßigerweise unterscheidet die Geräuschunterdrückung bei den Umgebungsgeräuschen zwischen Störgeräuschen, welche abgeschwächt werden, und Nutzgeräuschen, welche nicht abgeschwächt werden oder zumindest relativ zu den Störgeräuschen weniger abgeschwächt werden.

Alternativ oder zusätzlich zu einer aktiven Störgeräuschunterdrückung ist als Geräuschunterdrückung auch ein Beamformer geeignet, welcher durch Fokussierung auf einen Teilsektor der Umgebung solche Umgebungsgeräusche reduziert oder ausblendet, welche außerhalb des Teilsektors liegen. Insofern erfolgt hier eine Unterscheidung zwischen Stör- und Nutzsignalen insbesondere anhand der Richtung, aus welcher das jeweilige Umgebungsgeräusch stammt.

Bevorzugterweise wird der Sollwert anhand einer Funktion abhängig von einem Signal-zu-Rausch-Verhältnis bestimmt, nämlich abhängig von der Istlautstärke des Nutzers im Verhältnis zur Lautstärke der Umgebungsgeräusche. Das Signal-zu-Rauschverhältnis wird kurz auch lediglich als SNR bezeichnet und gibt das Verhältnis des Pegels der eigenen Stimme des Nutzers zum Pegel der Umgebungsgeräusche an. Die Funktion ist derart ausgebildet, dass mit abnehmendem SNR, d.h. insbesondere auch mit ansteigender Lautstärke der Umgebungsgeräusche, ein größerer Sollwert verwendet wird. Die Lautstärke der Umgebungsgeräusche wird zweckmäßigerweise in solchen Phasen gemessen, in welchen der Nutzer selbst nicht spricht. Möglich und geeignet ist aber auch eine Messung während der Nutzer spricht und wobei dann die eigene Stimme entsprechend abgeschwächt oder herausgefiltert wird. Der Sollwert für die aktuelle Umgebung wird somit bestimmt, indem das SNR der aktuellen Umgebung ermittelt wird, wofür insbesondere der Istwert und die Lautstärke der Umgebungsgeräusche gemessen werden, und indem weiter anhand der Funktion für das ermittelte SNR der Sollwert errechnet oder in einer Datenbank nachgeschlagen wird. Die Funktion ist demnach zweckmäßigerweise als Rechenvorschrift oder als Tabelle in einem Speicher insbesondere des Hörgeräts hinterlegt. Insgesamt wird somit der Sollwert umgebungsabhängig derart ausgewählt, dass bei der Bestimmung des Sollwerts der Pegel der eigenen Sprache im Vergleich zum Pegel der Umgebungsgeräusche berücksichtigt wird. Je lauter die eigene Stimme im Vergleich zur Umgebung ist, desto weniger Bedarf besteht zur Durchführung der Maßnahme. Entsprechend ist die Funktion derart ausgebildet, dass für ein geringeres SNR ein größerer Sollwert bestimmt und somit vorgegeben wird, sodass also der Nutzer in lauterer Umgebung auch lauter sprechen soll.

Vorzugsweise ist die Funktion als Lombard-Anstiegskurve ausgebildet. Die Lombard-Anstiegskurve ist nutzerabhängig und gibt für den jeweiligen Nutzer an, wie sich dessen Sprachlautstärke als Funktion des SNR verhält, falls keine Geräuschunterdrückung aktiviert ist. Mit anderen Worten: die Lombard-Anstiegskurve gibt die individuelle, natürliche Anpassung der Sprachlautstärke an die Lautstärke der Umgebungsgeräusche an.

In einer besonders bevorzugten Ausgestaltung wird oberhalb eines Grenz-SNR (d.h. Grenz-Signal-zu-Rausch-Verhältnis) als Sollwert ein Ruhewert verwendet, welcher einer mittleren Sprachlautstärke des Nutzers in einer ruhigen Umgebung entspricht und unterhalb des Grenz-SNR wird ausgehend von dem Ruhewert der Sollwert anhand der Funktion bestimmt. Die Funktion wird somit lediglich dann zur Bestimmung des Sollwerts verwendet, wenn die Umgebung relativ zur Sprachlautstärke des Nutzers eine bestimmte Mindestlautstärke aufweist. Dabei wird davon ausgegangen, dass unterhalb dieser Mindestlautstärke und somit oberhalb des Grenz-SNR die Umgebungsgeräusche derart leise sind, dass der Nutzer mit seiner mittleren Sprachlautstärke in ruhiger Umgebung spricht und dass dies dann auch für diese Umgebung ausreichend ist. Durch das Grenz-SNR sind demnach zwei Bereiche definiert, nämlich ein leiser Bereich oberhalb des Grenz-SNR und ein lauter Bereich unterhalb des Grenz-SNR, sodass also alle Umgebungen sozusagen auf zwei Typen verteilt sind, nämlich ruhige und laute Umgebunden. Im leisen Bereich, d.h. für ruhige Umgebungen, ist die mittlere Sprachlautstärke des Nutzers in ruhiger Umgebung ausreichend, sodass keine Notwendigkeit für Maßnahmen zur Korrektur der Sprachlautstärke besteht und eine solche Maßnahme auch nicht durchgeführt wird. Es wird davon ausgegangen, dass der Nutzer mit seiner mittleren Sprachlautstärke spricht. Als Sollwert wird demnach sozusagen der Ruhewert verwendet, welchem der Istwert dann üblicherweise auch entspricht, sodass kein Bedarf für eine Maßnahme besteht. Im lauten Bereich, d.h. in lauter Umgebung, ist dagegen die mittlere Sprachlautstärke des Nutzers in ruhiger Umgebung nicht ausreichend, um in der entsprechend lauten Umgebung hinreichend gehört zu werden, denn die Geräuschunterdrückung ist vorzugsweise in lauten Umgebungen aktiviert, sodass dann die Gefahr besteht, dass der Nutzer zu leise spricht, was durch Messung des Istwerts und Vergleich mit dem Sollwert überprüft wird. Spricht der Nutzer tatsächlich zu leise, wird die entsprechende Maßnahme durchgeführt. Im lauten Bereich gilt zudem insbesondere, dass mit lauter werdender Umgebung auch eine höhere Sprachlautstärke benötigt wird, sodass die Funktion in diesem Bereich entsprechend mit geringer werdendem SNR ansteigt und also eine immer höhere Sprachlautstärke des Nutzers verlangt wird.

Der Ruhewert ist nutzerabhängig und wird daher zweckmäßigerweise individuell für den Nutzer vorgegeben und hierzu geeigneterweise gemessen. Zudem ist insbesondere das Grenz-SNR vom Ruhewert abhängig, denn je höher der Ruhewert ist, desto lauter können die Umgebungsgeräusche sein, ohne dass eine Maßnahme zum Lautersprechen durchgeführt werden muss. Entsprechend ist auch das Grenz-SNR nutzerabhängig. Je nach Nutzer wird dann der laute Bereich unter Umständen für unterschiedliche SNR erreicht. In einem zweidimensionalen Diagramm des Sollwerts als Funktion des SNR ergibt sich dann im leisen Bereich für hohe SNR durch den Ruhewert eine Horizontale, im lauten Bereich dagegen dann eine zu niedrigeren SNR hin ansteigende Kurve, welche vom Ruhewert ausgeht, sodass der Ruhewert also insgesamt ein Minimum bildet. Da auch die Funktion gegebenenfalls nutzerabhängig ist, ist das Grenz-SNR dann entsprechend auch von der Funktion abhängig. Allgemein ergibt sich das Grenz-SNR aber insbesondere als Schnittpunkt des Ruhewerts mit der Funktion, nämlich als dasjenige SNR, bei welchem der Sollwert, welcher anhand der Funktion vorgegeben ist, den Ruhewert überschreitet, wenn also die mittlere Sprachlautstärke in ruhiger Umgebung der wenigstens notwendigen Sprachlautstärke entspricht. Zweckmäßigerweise ist am Schnittpunkt ein weicher Übergang derart ausgebildet, dass die Maßnahme gerade nicht abrupt mit Erreichen oder Überschreiten des Grenz-SNR durchgeführt wird, sondern dass die Maßnahme vielmehr graduell mit zunehmender Intensität durchgeführt wird, beginnend mit Erreichen oder Unterschreiten des Grenz-SNR oder bereits etwas, z.B. 3 dB, oberhalb des Grenz-SNR. Auf diese Weise sind der leise und der laute Bereich dann nicht scharf voneinander getrennt, sondern es wird vielmehr zwischen den beiden Bereich übergeblendet, was für den Nutzer angenehmer ist.

Grundsätzlich ist es möglich, den Sollwert einfach vorzugeben und hierzu je nach Ausgestaltung speziell die Funktion, den Ruhewert oder beide, vorzugeben. Vorzugsweise wird der Sollwert jedoch vor oder während des Betriebs des Hörgeräts individuell für den Nutzer gemessen. Dies hat den Vorteil, dass die individuelle Stimmcharakteristik des Nutzers automatisch mit berücksichtigt wird. Beispielsweise spricht nicht jeder Nutzer bei gegebenen Umgebungsgeräuschen auch gleich laut. Solch ein Unterschied wird dann durch Messung des Sollwerts vorteilhaft berücksichtigt. Der Sollwert wird entweder mittels des Hörgeräts selbst gemessen oder davon separat in einem Kalibrierungsverfahren, z.B. mit einem hierzu geeignet ausgebildeten Messsystem, z.B. bei einem Audiologen. Grundsätzlich muss der Sollwert nicht unbedingt während des Verfahrens gemessen werden, es ist vielmehr ausreichend, dass der Sollwert während des Verfahrens bestimmt wird und hierzu abhängig von der aktuellen Umgebung z.B. berechnet wird oder in einer Datenbank nachgeschlagen wird. Zweckmäßigerweise wird in einer Fitting Session zur Anpassung des Hörgeräts an den Nutzer im Vorfeld der tatsächlichen Benutzung ein Kalibrierungsverfahren durchgeführt, in welchem der Sollwert initial gemessen wird, d.h. je nach Ausgestaltung speziell die Funktion oder der Ruhewert oder beide.

Vorzugsweise wird der Ruhewert als mittlere Sprachlautstärke des Nutzers in ruhiger Umgebung gemessen. Unter einer ruhigen Umgebung wird insbesondere eine Umgebung mit einem Signal-zu-Rauschverhältnis von wenigstens 10 dB verstanden. Die mittlere Sprachlautstärke wird dann als Mittelwert aus mehreren Messungen der Sprachlautstärke in ruhiger Umgebung errechnet. In einer geeigneten Ausgestaltung wird der Ruhewert im Betrieb des Hörgeräts gemessen, insbesondere kontinuierlich oder wiederkehrend in regelmäßigen Abständen. Allgemein, aber speziell bei der Messung des Ruhewerts im Betrieb, wird vorteilhafterweise eine Eigenstimmenerkennung verwendet, um sicherzustellen, dass tatsächlich die Lautstärke der eigenen Stimme des Nutzers bestimmt wird und die Messung nicht durch fremde Stimmen verfälscht wird. Die Eigenstimmenerkennung ist entsprechend insbesondere derart ausgebildet, dass diese die eigene Stimme des Nutzers gegenüber anderen Umgebungsgeräuschen hervorhebt.

Vorzugsweise wird die Funktion im Vorfeld des regulären Betriebs des Hörgeräts und in einem Kalibrierungsverfahren z.B. während einer Fitting Session gemessen und dann z.B. im Hörgerät gespeichert, zur späteren Bestimmung des Sollwerts im Betrieb. Die Lombard-Anstiegskurve wird beispielsweise gemessen, indem dem Nutzer mittels eines Kopfhörers Umgebungsgeräusche mit unterschiedlicher Lautstärke vorgespielt werden und währenddessen die Sprachlautstärke des Nutzers gemessen wird.

Vorliegend wird die Umgebung mittels eines Klassifikators klassifiziert und einer Klasse zugeordnet und der Sollwert wird bestimmt, indem dieser abhängig von der Klasse ausgewählt wird. Der Klassifikator ist insbesondere ein Teil des Hörgeräts. Der Klassifikator analysiert insbesondere die Umgebungsgeräusche und bestimmt daraus die Klasse, z.B. eigene Sprache, fremde Sprache, Sprache in ruhiger Umgebung, Sprache mit Störgeräuschen, Musik, nur Störgeräusche oder dergleichen. Der Sollwert, welcher einer jeweiligen Klasse zugeordnet ist, ist zweckmäßigerweise in einem Speicher hinterlegt und wird dann vom Hörgerät abgerufen und verwendet. Zweckmäßigerweise ist der Klassifikator ausgebildet, die aktuelle Umgebung entweder als laute oder ruhige Umgebung zu klassifizieren, sodass dann bei einer lauten Umgebung der Sollwert wie beschrieben anhand der Funktion bestimmt wird und in ruhiger Umgebung dem Ruhewert entspricht.

In einer bevorzugten Ausgestaltung wird der Istwert bestimmt, indem die Sprachlautstärke mittels eines äußeren Mikrofons des Hörgeräts und in einer Eigenstimmenphase, in welcher der Nutzer selbst spricht, gemessen wird. Das äußere Mikrofon ist bei der bestimmungsgemäßen Verwendung des Hörgeräts außerhalb des Ohrkanals des Nutzers angeordnet und regelmäßig in einem Gehäuse des Hörgeräts untergebracht. Das Gehäuse wird am, im oder hinter dem Ohr getragen. Das äußere Mikrofon dient vorzugsweise im Betrieb des Hörgeräts zur Aufnahme der Umgebungsgeräusche zwecks Verstärkung und Ausgabe an den Nutzer. Der Ausgestaltung mit äußerem Mikrofon und Messung des Istwerts während einer Eigenstimmenphase liegt die Überlegung zugrunde, das sich in einer solchen Eigenstimmenphase der Pegel der eigenen Sprache, also der Istwert, besonders zuverlässig messen lässt. Zweckmäßigerweise wird hierbei eine Eigenstimmenerkennung verwendet, welche alle übrigen Geräusche gegenüber der eigenen Stimme des Nutzers reduziert und damit die Genauigkeit der Messung des Istwerts erhöht. Insbesondere wird auch die Eigenstimmenphase mittels einer Eigenstimmenerkennung erkannt. Die Eigenstimmenerkennung ist insbesondere ein Teil des Hörgeräts.

In einer bevorzugten Ausgestaltung wird der Istwert bestimmt, indem die Sprachlautstärke mittels eines inneren Mikrofons des Hörgeräts im Ohrkanal des Nutzers gemessen wird. Ein inneres Mikrofon wird auch als Körperschallmikrofon bezeichnet und weist den Vorteil auf, dass dieses im Gegensatz zu einem äußeren Mikrofon verstärkt die eigenen Geräusche des Nutzers aufnimmt, vor Allem dessen Stimme. Dadurch ist ein inneres Mikrofon besonders zur genauen Messung des Istwerts geeignet. Auch eine Kombination mit einer Eigenstimmenerkennung wie oben im Zusammenhang mit einem äußeren Mikrofon beschrieben ist hierbei vorteilhaft.

Sofern der Sollwert gemessen wird, wird hierfür zweckmäßigerweise dasselbe Mikrofon verwendet wie zur Messung des Istwerts.

Zusätzlich zur Messung des Istwerts wird zweckmäßigerweise auch ein Hintergrundpegel gemessen, d.h. die Lautstärke der Umgebungsgeräusche, vorzugsweise außerhalb einer Eigenstimmenphase. Vorzugsweise wird ein mittlerer Hintergrundpegel gemessen, indem eine zeitliche Mittelung des Hintergrundpegels erfolgt.

Wie weiter oben bereits angedeutet wurde, sind verschiedene Maßnahmen geeignet, den Nutzer zu einer Erhöhung der Sprachlautstärke zu veranlassen. Einige besonders vorteilhafte Maßnahmen werden nachfolgend genauer beschrieben. In einer geeigneten Ausgestaltung sind mehrere der Maßnahmen miteinander kombiniert.

In einer vorteilhaften Ausgestaltung umfasst die Maßnahme, dass die eigene Stimme des Nutzers an diesen mit verringerter Lautstärke ausgegeben wird. Die Stimme des Nutzers wird wie alle übrigen Umgebungsgeräusche vom Hörgerät verarbeitet und abhängig von einem vorgegebenen Verstärkungsprofil verstärkt. Um nun den Nutzer zu veranlassen, lauter zu sprechen, wird dessen eigene Stimme leiser ausgegeben, als anhand des eigentlichen Verstärkungsprofils für den Nutzer üblich wäre. Dabei wird insbesondere die Lautstärke der eigenen Stimme relativ zu den Umgebungsgeräuschen reduziert. Dem liegt die Beobachtung zugrunde, dass die eigene Sprachlautstärke von jedem Sprecher üblicherweise anhand der Wahrnehmung der eigenen Sprachlautstärke eingestellt wird, die gehörte Sprache dient also üblicherweise als Feedback zur Anpassung der Sprachlautstärke. Wenn man sich selbst schlecht hört, ist davon auszugehen, dass auch andere Personen einen nur schlecht hören können. Dieser individuelle Feedbackmechanismus wird nun genutzt, um den Nutzer möglicherweise sogar unbewusst zur Erhöhung seiner oder ihrer Sprachlautstärke zu veranlassen. Zweckmäßigerweise wird die eigene Stimme mit zunehmender Differenz zwischen Sollwert und Istwert entsprechend leiser an den Nutzer ausgegeben.

Zur Reduzierung der Lautstärke der eigenen Stimme des Nutzers wird beispielsweise ein räumlicher Filter in Sprechrichtung des Nutzers gelegt, sodass also Umgebungsgeräusche aus der Sprechrichtung, d.h. vorrangig die eigene Stimme, weniger stark an den Nutzer ausgegeben werden, als Umgebungsgeräusche aus anderen Richtungen. Besonders zweckmäßig ist eine räumliche Filterung des Mundbereichs des Nutzers, sodass ein Gesprächspartner vor dem Nutzer gerade nicht leiser wird, sondern möglichst nur die eigene Stimme in der Lautstärke reduziert wird. Die räumliche Filterung wird vorzugsweise mittels Beamforming realisiert, d.h. durch eine direktionale Verarbeitung der Geräusche, welche vom Hörgerät aufgenommen werden. Geräusche aus dem Mundbereich des Nutzers werden dabei durch einen direktionalen Filter reduziert, welcher in den Mundbereich gelegt wird. Der direktionale Filter wird auch als "räumliches Notch" bezeichnet.

In einer vorteilhaften Ausgestaltung umfasst die Maßnahme, dass die Geräuschunterdrückung reduziert oder deaktiviert wird. Geeigneterweise wird bei einer Erkennung einer Gesprächssituation, z.B. mittels eines Klassifikators wie bereits beschrieben, die Geräuschunterdrückung automatisch reduziert oder deaktiviert. Allgemein werden dann also die Umgebungsgeräusche weniger oder gar nicht mehr unterdrückt, sodass unter Ausnutzung des oben beschriebenen Feedbackmechanismus der Nutzer selbstständig die Sprachlautstärke erhöht, um sich an die nun subjektiv lauteren Umgebungsgeräusche anzupassen. Zweckmäßigerweise wird die Geräuschunterdrückung mit zunehmender Differenz zwischen Sollwert und Istwert entsprechend stärker reduziert. Um die Wirkung der Geräuschunterdrückung gerade in lauter Umgebung nicht vollständig aufzugeben, wird die Geräuschunterdrückung zweckmäßigerweise nicht insgesamt reduziert oder deaktiviert, sondern lediglich selektiv für einen oder mehrere Frequenzbereiche, sodass dann in den verbleibenden Frequenzbereichen weiterhin eine maximal effektive Geräuschunterdrückung erfolgt.

In einer vorteilhaften Ausgestaltung umfasst die Maßnahme, dass das Hörgerät selbst oder mittelbar über ein externes Gerät einen Hinweis an den Nutzer ausgibt, dass dieser zu leise spricht. Das externe Gerät ist z.B. ein Smartphone, welches über eine Datenverbindung mit dem Hörgerät gekoppelt ist. Die Maßnahme umfasst demnach die Ausgabe eines Hinweises oder das Aussenden eines entsprechenden Befehls an das externe Gerät, einen Hinweis auszugeben. Der Hinweis ist beispielsweise ein optischer, akustischer oder haptischer Hinweise, z.B. eine Vibration, eine Textmitteilung oder ein Lichtsignal. Ob der Nutzer dem Hinweis folgt, bleibt diesem allerdings selbst überlassen, relevant ist vielmehr, dass der Nutzer über seine zu geringe Sprachlautstärke in irgendeiner Form aktiv informiert wird. Langfristig ergibt sich hierdurch sogar möglicherweise ein Lerneffekt derart, dass der Nutzer bei aktiver Geräuschunterdrückung selbststätig lauter spricht und eine Maßnahme des Hörgeräts dann nicht mehr nötig ist.

In einer vorteilhaften Ausgestaltung umfasst die Maßnahme, dass das Hörgerät an den Nutzer ein psychoakustisches Zusatzgeräusch ausgibt. Das Zusatzgeräusch wird insbesondere über einen Hörer des Hörgeräts an den Nutzer ausgegeben. Dem liegt die Überlegung zugrunde, als Alternativ zum bereits beschriebenen Durchlassen bereits existierender Umgebungsgeräusche oder der Reduzierung der eigenen Stimme, zusätzlich ein Geräusch zu erzeugen, welches für den Nutzer subjektiv die Lautstärke der Umgebungsgeräusche in der aktuellen Umgebung gegenüber der tatsächlichen Lautstärke erhöht. Zweckmäßigerweise wird das Zusatzgeräusch mit einem Pegel ausgegeben, welcher abhängig von der Differenz zwischen Sollwert und Istwert ausgewählt und eingestellt wird.

Das psychoakustische Zusatzgeräusch zeichnet sich insbesondere dadurch aus, dass dieses ein unterschwelliges, also subjektiv nicht wahrgenommenes Lautheitsempfinden erzeugt. Das psychoakustische Zusatzgeräusch ist insbesondere derart ausgebildet ist, dass dieses an sich vom Nutzer nicht als störend empfunden wird, aber dennoch zur Lautheit beiträgt, welche vom Nutzer wahrgenommen wird, sodass der Nutzer entsprechend dem bereits genannten Feedbackmechanismus dann lauter spricht als ohne das Zusatzgeräusch. Geeignete psychoakustische Zusatzgeräusche sind beispielswiese einzelne oder kombinierte tieffrequente Töne, d.h. insbesondere Schallsignale mit einer Frequenz unterhalb von 20 Hz, d.h. solche Töne, welche nicht bewusst wahrgenommen werden, allerdings dennoch zum Schalldruck und somit zur gefühlten Lautstärke beitragen. Ebenfalls als psychoakustisches Zusatzgeräusch geeignet ist ein moduliertes Rauschen, z.B. ein weißes Rauschen oder ein rosa Rauschen, welches ebenfalls typischerweise nicht als störend wahrgenommen wird und auch die Sprachverständlichkeit nicht negativ beeinflusst.

Ein erfindungsgemäßes Hörgerät weist eine Steuereinheit auf, auch als Controller bezeichnet. Die Steuereinheit ist ausgebildet zur Durchführung eines Verfahrens wie vorstehend beschrieben. Vorzugsweise ist die Steuereinheit in einem Gehäuse des Hörgeräts untergebracht und das Gehäuse wird bei der bestimmungsgemäßen Verwendung des Hörgeräts vom Nutzer am, im oder hinter dem Ohr getragen. Die Geräuschunterdrückung und sofern vorhanden die Eigenstimmenerkennung und der Klassifikator sind jeweils durch eine entsprechende Recheneinheit implementiert, wobei die jeweiligen Recheneinheiten jeweils zweckmäßigerweise in die Steuereinheit des Hörgeräts integriert sind.

Das Hörgerät ist bevorzugterweise ein Hörgerät zum Ausgleich eines Hördefizits des Nutzers, d.h. das Hörgerät ist ausgebildet, die Umgebungsgeräusche zu modifizieren, um dem Hördefizit entgegenzuwirken. Typischerweise werden die Umgebungsgeräusche hierzu mit einer Verstärkungseinheit des Hörgeräts verstärkt oder mit einem Kompressor des Hörgeräts frequenzverschoben oder eine Kombination hiervon. Die Modifizierung erfolgt insbesondere frequenzabhängig. Die Verstärkungseinheit und der Kompressor sind insbesondere Teile der Steuereinheit.

Grundsätzlich sind die beschriebenen Konzepte auch umgekehrt analog anwendbar auf eine Situation, in welcher der Nutzer zu laut spricht und dann durch eine geeignete Maßnahme dazu veranlasst werden soll, leiser zu sprechen. In einer zweckmäßigen Ausgestaltung wird demnach von dem Hörgerät eine Maßnahme durchgeführt, um den Nutzer zu veranlassen, leiser zu sprechen, falls der Istwert größer ist als ein zweiter Sollwert, welcher insbesondere oberhalb des bisher beschriebenen Sollwerts liegt, welcher dann ein erster Sollwert ist. Der erste und der zweite Sollwert definieren somit drei Bereiche, nämlich einen ersten Bereich, in welchem der Nutzer zu leise spricht, einen zweiten Bereich, in welchem die Sprechlautstärke des Nutzers weder zu leise noch zu laut ist, und einen dritten Bereich, in welchem der Nutzer zu laut spricht. Je nachdem, in welchem Bereich der Istwert liegt, wird dann vom Hörgerät eine geeignete Maßnahme ausgeführt, um den Nutzer zu veranlassen, seine Sprachlautstärke entsprechend anzupassen.

Die bereits genannten Maßnahmen können analog auch auf den Fall eines zu lauten Sprechend angewandt werden. Beispielsweise wird dann dem Nutzer seine eigene Stimme lauter ausgegeben.

Nachfolgend werden Ausführungsbeispiele der Erfindung anhand einer Zeichnung näher erläutert. Darin zeigen jeweils schematisch:
- Fig. 1: ein Verfahren zum Betrieb eines Hörgeräts,
- Fig. 2: ein Nutzer mit einem Hörgerät in einer Umgebung,
- Fig. 3: das Hörgerät aus Fig. 2,
- Fig. 4: einen Sollwert als Funktion eines Signal-zu-Rausch-Verhältnisses.

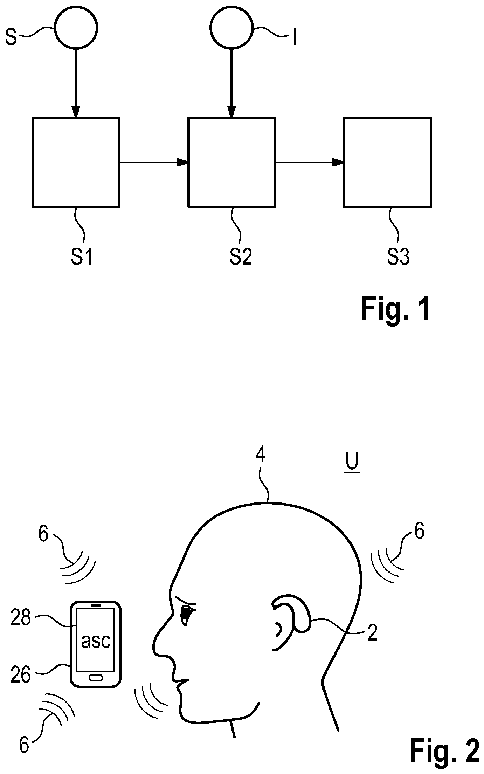

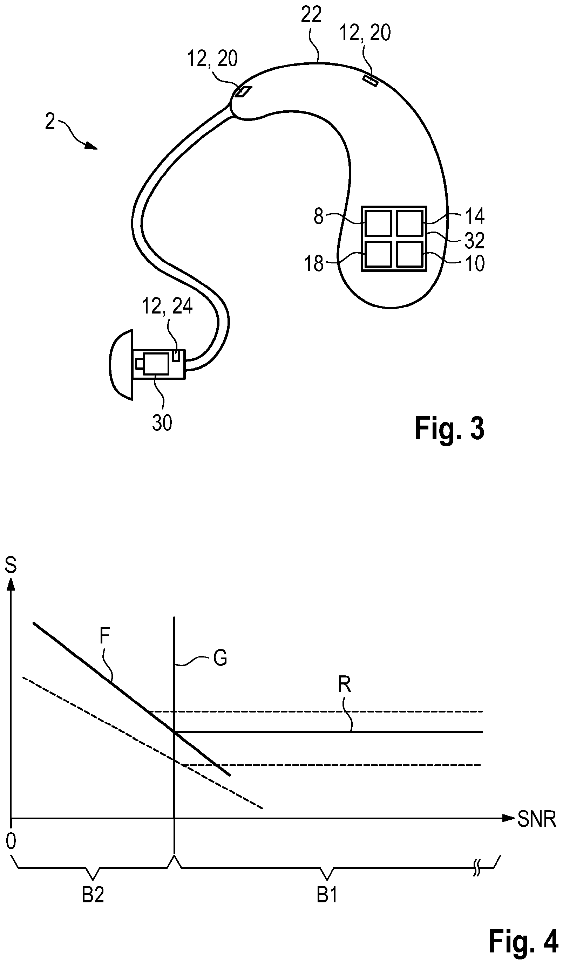

In Fig. 1 ist ein Flussdiagram eines Verfahrens zum Betrieb eines Hörgeräts 2 gezeigt. Fig. 2 zeigt ein hierzu geeignetes Hörgerät 2 bei bestimmungsgemäßer Verwendung durch einen Nutzer 4 in einer Umgebung U, welche auch als aktuelle Umgebung bezeichnet wird. Fig. 3 zeigt das Hörgerät 2 im Detail. Die Umgebung U ist vorrangig charakterisiert durch Umgebungsgeräusche 6. Vorliegend ist eine Geräuschunterdrückung 8 des Hörgeräts 2 aktiviert, sodass Umgebungsgeräusche 6, speziell Störgeräusche, für den Nutzer 4 reduziert werden. Die Geräuschunterdrückung 8 ist bedarfsweise ein- und ausschaltbar, entweder automatisch, manuell oder beides.

Im Rahmen des in Fig. 1 gezeigten Verfahrens wird in einem ersten Schritt S1 für die aktuelle Umgebung U ein Sollwert S für die Sprachlautstärke des Nutzers 4 bestimmt. Der Sollwert S wird auch als Sollautstärke bezeichnet und gibt denjenigen Pegel an, welcher in der aktuellen Umgebung U vom Nutzer 4 vorzugsweise erreicht wird, um eine ausreichende Verständlichkeit z.B. für andere Personen in der Umgebung zu gewährleisten. Hierzu wird die aktuelle Umgebung U untersucht und es wird ermittelt, welche Sprachlautstärke des Nutzers 4 notwendig ist, um diesen in der aktuellen Umgebung U verständlich zu machen. Vorliegend wird das Signal-zu-Rausch-Verhältnis, kurz SNR, der Stimme des Nutzers 4 zu den Umgebungsgeräuschen 6 gemessen. Das SNR gibt die Lautstärke der Umgebungsgeräusche 6 relativ zur Sprachlautstärke des Nutzers 4 an. Alternativ oder zusätzlich wird die Umgebung U mittels eines Klassifikators 10 klassifiziert, d.h. einer Klasse zugewiesen wird, und der Sollwert S dann abhängig von der Klasse ausgewählt.

In einem zweiten Schritt S2 des Verfahrens wird ein Istwert I für die Sprachlautstärke, d.h. eine Istlautstärke, des Nutzers 4 gemessen. Hierzu wird ein Mikrofon 12 des Hörgeräts verwendet. Genauer gesagt wird die Sprache des Nutzers 4 wird mit dem Mikrofon 12 aufgenommen und anschließend wird deren Pegel gemessen. Der Istwert I gibt somit insgesamt an, wie laut der Nutzer 4 tatsächlich spricht. Hierbei wird vorliegend eine Eigenstimmenerkennung 14, kurv OVD (own voice detection) verwendet, mittels welcher gezielt die Stimme des Nutzers 4 isoliert wird, um dann deren Lautstärke zu bestimmen. Die Eigenstimmenerkennung ist hier ein Teil des Hörgeräts 2.

In einem dritten Schritt S2 des Verfahren wird überprüft, ob der Istwert I geringer ist als der Sollwert S und falls dies der Fall ist, wird von dem Hörgerät 2 eine Maßnahme durchgeführt, um den Nutzer 4 zu veranlassen, lauter zu sprechen. Dabei bleibt es allerdings dem Nutzer 4 selbst überlassen, auf die Maßnahme auch zu reagieren, also tatsächlich lauter zu sprechen. Vorliegend wird im dritten Schritt S3 die Differenz zwischen Sollwert S und Istwert I gebildet und dann abhängig von dieser Differenz die Maßnahme veranlasst oder nicht. Damit ist sozusagen eine Regelung realisiert, bei welcher die Sprachlautstärke des Nutzers 4 eine Regelgröße ist und bei welcher durch die Maßnahme abhängig von der Differenz zwischen Ist- und Solllautstärke eine Stellgröße ausgegeben wird, um den Nutzer 4 zu beeinflussen.

Grundsätzlich umfasst das Verfahren somit drei Schritte S1, S2, S3. Der erste Schritt S1 und der zweite Schritt S2 können abweichend vom Ausführungsbeispiel der Fig. 1 in beliebiger Reihenfolge und auch gleichzeitig ausgeführt werden sowie jeweils entweder einmalig oder wiederkehrend.

Die Geräuschunterdrückung 8 ist im gezeigten Ausführungsbeispiel eine aktive Störgeräuschunterdrückung, kurz auch als ANC (active noise cancellation) bezeichnet. Bei eingeschalteter aktiver Störgeräuschunterdrückung werden die Umgebungsgeräusche 6 mit einem Mikrofon 12 des Hörgeräts 2 aufgenommen und von der Geräuschunterdrückung 8 durch zusätzliche Gegengeräusche derart kompensiert, dass die Umgebungsgeräusche 6 in der Wahrnehmung des Nutzers 4 reduziert sind. In einer nicht gezeigten Variante wird alternativ oder zusätzlich zu einer aktiven Störgeräuschunterdrückung als Geräuschunterdrückung 8 ein Beamformer verwendet, welcher durch Fokussierung auf einen Teilsektor der Umgebung U solche Umgebungsgeräusche 6 reduziert oder ausblendet, welche außerhalb des Teilsektors liegen.

Der Sollwert S wird vorliegend anhand einer Funktion F abhängig von einem Signal-zu-Rausch-Verhältnis bestimmt, nämlich abhängig von der Istlautstärke des Nutzers 4 im Verhältnis zur Lautstärke der Umgebungsgeräusche 6. Das Signal-zu-Rauschverhältnis wird kurz als SNR bezeichnet und gibt das Verhältnis des Pegels der eigenen Stimme des Nutzers 4 zum Pegel der Umgebungsgeräusche 6 an. Eine beispielhafte Funktion F ist in Fig. 4 gezeigt und derart ausgebildet, dass mit ansteigender Lautstärke, d.h. mit geringerem SNR, ein größerer Sollwert S verwendet wird. Der Sollwert S für die aktuelle Umgebung U wird nun bestimmt, indem das SNR der aktuellen Umgebung U ermittelt wird, wofür der Istwert I und die Lautstärke der Umgebungsgeräusche 6 gemessen werden, und indem weiter anhand der Funktion F für das ermittelte SNR der Sollwert S errechnet oder nachgeschlagen wird. Die Funktion F ist hier als Rechenvorschrift oder als Tabelle in einem Speicher 18 des Hörgeräts 2 hinterlegt. Im vorliegenden Beispiel ist die Funktion F zudem speziell als Lombard-Anstiegskurve ausgebildet und gibt nutzerabhängig an, wie sich die Sprachlautstärke des Nutzers 4 als Funktion des SNR verhält, falls keine Geräuschunterdrückung 8 aktiviert ist.

Weiterhin ist in Fig. 4 erkennbar, dass im gezeigten Ausführungsbeispiel oberhalb eines Grenz-SNR G als Sollwert S ein Ruhewert R verwendet wird, welcher einer mittleren Sprachlautstärke des Nutzers 4 in einer ruhigen Umgebung U entspricht.

Unterhalb des Grenz-SNR G wird dagegen ausgehend von dem Ruhewert R der Sollwert S anhand der Funktion F bestimmt, sodass diese also lediglich dann zur Bestimmung des Sollwerts S verwendet wird, wenn die Umgebung U relativ zur Sprachlautstärke des Nutzers 4 eine bestimmte Mindestlautstärke aufweist. Oberhalb des Grenz-SNR G sind die Umgebungsgeräusche 6 derart leise sind, dass die mittlere Sprachlautstärke des Nutzers 4 in ruhiger Umgebung U ausreichend ist. Durch das Grenz-SNR G sind wie aus Fig. 4 deutlich wird zwei Bereiche definiert, nämlich ein leiser Bereich B1 oberhalb des Grenz-SNR G und ein lauter Bereich B2 unterhalb des Grenz-SNR G. Im leisen Bereich B1, d.h. für ruhige Umgebungen U, ist die mittlere Sprachlautstärke des Nutzers 4 ausreichend, sodass keine Notwendigkeit für Maßnahmen zur Korrektur der Sprachlautstärke besteht und eine solche Maßnahme auch nicht durchgeführt wird. Als Sollwert S wird demnach sozusagen der Ruhewert R verwendet. Im lauten Bereich B2, d.h. in lauter Umgebung U, ist dagegen die mittlere Sprachlautstärke des Nutzers 4 nicht ausreichend, um hinreichend gehört zu werden, da die Geräuschunterdrückung 8 aktiviert ist und somit die Gefahr besteht, dass der Nutzer 4 zu leise spricht. Dabei wird vorliegend mit lauter werdender Umgebung U auch eine höhere Sprachlautstärke benötigt, sodass die Funktion F in diesem lauten Bereich B2 entsprechend mit geringer werdendem SNR ansteigt, wodurch eine immer höhere Sprachlautstärke des Nutzers 4 verlangt wird.

Fig. 4 zeigt lediglich ein einzelnes von vielen möglichen Beispielen für die Funktion F und den Ruhewert R, da diese beiden Parameter typischerweise nutzerabhängig sind. So können sich die Funktion F und der Ruhewert R je nach Nutzer 4 im Vergleich zum Beispiel der Fig. 4 unabhängig voneinander in vertikaler Richtung verschieben. Die Funktion F kann zudem auch in horizontaler Richtung verschoben sein, eine andere Steigung aufweisen oder auch eine andere als die gezeigte, gerade Form. Alternative mögliche Ruhewerte R und Funktionen F sind in Fig. 4 durch gestrichene Linien angedeutet.

Erkennbar ist auch, dass das Grenz-SNR G vom Ruhewert R und auch von der Funktion F abhängig, denn je höher der Ruhewert R ist, desto lauter können die Umgebungsgeräusche 6 sein, ohne dass eine Maßnahme zum Lautersprechen durchgeführt werden muss. Entsprechend ist auch das Grenz-SNR G nutzerabhängig, sodass je nach Nutzer 4 der laute Bereich B2 unter Umständen für unterschiedliche SNR erreicht wird. Im in Fig. 4 gezeigten zweidimensionalen Diagramm des Sollwerts S als Funktion des SNR ergibt sich dann im leisen Bereich B1 für hohe SNR durch den Ruhewert R wie gezeigt eine Horizontale, im lauten Bereich B2 dagegen eine zu niedrigeren SNR hin ansteigende Kurve, nämlich die Funktion F, welche vom Ruhewert R ausgeht, sodass dieser insgesamt ein Minimum bildet. Allgemein ergibt sich das Grenz-SNR G als Schnittpunkt des Ruhewerts R mit der Funktion F, nämlich als dasjenige SNR, bei welchem der Sollwert S, welcher anhand der Funktion F vorgegeben ist, den Ruhewert R überschreitet, wenn also die mittlere Sprachlautstärke in ruhiger Umgebung U der wenigstens notwendigen Sprachlautstärke entspricht. An diesem Schnittpunkt ist vorliegend ein scharfer Übergang ausgebildet, in einer nicht gezeigten Variante ist dagegen ein demgegenüber weicher Übergang derart ausgebildet, dass die Maßnahme gerade nicht abrupt mit Erreichen oder Überschreiten des Grenz-SNR G durchgeführt wird, sondern dass die Maßnahme vielmehr graduell mit zunehmender Intensität durchgeführt wird, beginnend mit Erreichen oder Unterschreiten des Grenz-SNR G oder bereits etwas, z.B. 3 dB, oberhalb des Grenz-SNR G.

In einer Variante wird der Sollwert S einfach vorgegeben und hierzu werden speziell die Funktion F und der Ruhewert R vorgegeben. Alternativ oder zusätzlich wird der Sollwert S, speziell die Funktion F und der Ruhewert R, jedoch vor oder während des Betriebs des Hörgeräts 2 individuell für den Nutzer 4 gemessen. Der Sollwert S wird mittels des Hörgeräts 2 selbst gemessen oder davon separat in einem Kalibrierungsverfahren oder beides. Der Ruhewert R wird vorliegend als mittlere Sprachlautstärke des Nutzers 4 in ruhiger Umgebung U gemessen, wobei unter einer ruhigen Umgebung U vorliegend eine Umgebung U mit einem SNR von wenigstens 10 dB verstanden. In einer möglichen Variante wird hierbei die Eigenstimmenerkennung 14 verwendet, um sicherzustellen, dass tatsächlich die Lautstärke der eigenen Stimme des Nutzers 4 bestimmt wird. Die Funktion F wird vorliegend im Vorfeld des regulären Betriebs des Hörgeräts 2 in einem Kalibrierungsverfahren z.B. während einer Fitting Session gemessen und dann im Hörgerät 2 gespeichert, zur späteren Bestimmung des Sollwerts S im Betrieb. In einer nicht gezeigten Variante wird die Funktion F alternativ oder zusätzlich im Betrieb des Hörgeräts 2 gemessen.

In einer Variante des Ausführungsbeispiels wird die Umgebung U mittels des Klassifikators 10 klassifiziert und einer Klasse zugeordnet und der Sollwert S wird bestimmt, indem dieser abhängig von der Klasse ausgewählt wird. Der Klassifikator 10 analysiert hierzu die Umgebungsgeräusche 6 und bestimmt daraus die Klasse, z.B. eigene Sprache, fremde Sprache, Sprache in ruhiger Umgebung, Sprache mit Störgeräuschen, Musik, nur Störgeräusche oder dergleichen.

In einer weiteren Variante des Ausführungsbeispiels wird der Istwert I bestimmt, indem die Sprachlautstärke mittels eines äußeren Mikrofons 20 des Hörgeräts 2 und in einer Eigenstimmenphase, in welcher der Nutzer 4 selbst spricht, gemessen. Das äußere Mikrofon 20 ist hier identisch mit dem bereits beschriebenen Mikrofon 12. Bei der bestimmungsgemäßen Verwendung des Hörgeräts 2 ist das äu-βere Mikrofon 20 wie aus Fig. 2 und 3 erkennbar außerhalb des Ohrkanals des Nutzers 4 angeordnet und in einem Gehäuse 22 des Hörgeräts 2 untergebracht. Das Gehäuse 22 wird am, im oder hinter dem Ohr getragen. Das äußere Mikrofon 22 dient vorliegend im Betrieb des Hörgeräts 2 auch zur Aufnahme der Umgebungsgeräusche 6 zwecks Verstärkung und Ausgabe an den Nutzer 4 zum Ausgleich eines Hördefizits.

In einer weiteren Variante des Ausführungsbeispiels wird der Istwert I bestimmt, indem die Sprachlautstärke mittels eines inneren Mikrofons 24 des Hörgeräts 2 im Ohrkanal des Nutzers 4 gemessen wird. Das innere Mikrofon 24 nimmt im Gegensatz zum äußeren Mikrofon 20 verstärkt die eigenen Geräusche des Nutzers 4 auf. In einer nicht gezeigten Variante ist das innere Mikrofon 24 mit der Eigenstimmenerkennung 14 wie oben im Zusammenhang mit dem äußeren Mikrofon 20 beschrieben kombiniert.

Um den Nutzer 4 zu einer Erhöhung der Sprachlautstärke zu veranlassen, sind verschiedene Maßnahmen geeignet. Einige Maßnahmen werden nachfolgend genauer beschrieben. Diese sind miteinander kombinierbar.

In einer Variante des Ausführungsbeispiels umfasst die Maßnahme, dass die eigene Stimme des Nutzers 4 an diesen mit verringerter Lautstärke ausgegeben wird. Die Stimme des Nutzers 4 wird wie alle übrigen Umgebungsgeräusche 6 vom Hörgerät 2 verarbeitet und abhängig von einem vorgegebenen Verstärkungsprofil verstärkt. Um nun den Nutzer 4 zu veranlassen, lauter zu sprechen, wird dessen eigene Stimme nun leiser ausgegeben, als anhand des eigentlichen Verstärkungsprofils für den Nutzer 4 üblich wäre, sodass also die Lautstärke der eigenen Stimme relativ zu den Umgebungsgeräuschen 6 reduziert wird. Da die Wahrnehmung der eigenen Stimme jeglichem Sprecher regelmäßig als Feedback zur Anpassung der Sprachlautstärke dient, wird der Nutzer 4 bei Reduzierung der eigenen Stimme voraussichtlich automatisch lauter sprechen. Dieser individuelle Feedbackmechanismus wird vorliegend genutzt.

In einer weiteren Variante des Ausführungsbeispiels umfasst die Maßnahme, dass die Geräuschunterdrückung 8 reduziert oder deaktiviert wird, sodass dann also die Umgebungsgeräusche 6 weniger oder gar nicht mehr unterdrückt werden und unter Ausnutzung des oben beschriebenen Feedbackmechanismus der Nutzer 4 selbstständig die Sprachlautstärke erhöht. In einer Variante hiervon wird die Geräuschunterdrückung 8 nicht insgesamt reduziert oder deaktiviert, sondern lediglich selektiv für einen oder mehrere Frequenzbereiche.

In einer weiteren Variante des Ausführungsbeispiels umfasst die Maßnahme, dass das Hörgerät 2 selbst oder mittelbar über ein externes Gerät 26 einen Hinweis 28 an den Nutzer 4 ausgibt, dass dieser zu leise spricht. Das externe Gerät 28 ist in Fig. 2 ein Smartphone, welches über eine Datenverbindung mit dem Hörgerät 2 gekoppelt ist. Die Maßnahme umfasst demnach die Ausgabe eines Hinweises 28 beispielsweise über einen Hörer 30 des Hörgeräts 2 oder das Aussenden eines entsprechenden Befehls an das externe Gerät 26, einen Hinweis 28 auszugeben. Der Hinweis 28 ist beispielsweise ein optischer, akustischer oder haptischer Hinweis.

In einer weiteren Variante des Ausführungsbeispiels umfasst die Maßnahme, dass das Hörgerät 2 z.B. über den Hörer 30 an den Nutzer 4 ein psychoakustisches Zusatzgeräusch ausgibt, welches ein unterschwelliges, also subjektiv nicht wahrgenommenes Lautheitsempfinden erzeugt. Das psychoakustische Zusatzgeräusch ist derart ausgebildet ist, dass dieses an sich vom Nutzer 4 nicht als störend empfunden wird, aber dennoch zur wahrgenommenen Lautheit beiträgt, sodass der bereits genannte Feedbackmechanismus genutzt wird. Das psychoakustische Zusatzgeräusch ist beispielswiese ein tieffrequenter Ton mit einer Frequenz z.B. unterhalb von 20 Hz. In einem anderen Beispiel ist das psychoakustische Zusatzgeräusch ein moduliertes Rauschen, z.B. ein weißes Rauschen oder ein rosa Rauschen.

Das gezeigte Hörgerät 2 weist eine Steuereinheit 32 auf, welche auch als Controller bezeichnet wird. Die Steuereinheit 32 ist ausgebildet zur Durchführung des Verfahrens wie vorstehend beschrieben. Die Steuereinheit 32 ist in dem Gehäuse 22 untergebracht. Die Geräuschunterdrückung 8, die Eigenstimmenerkennung 14 und der Klassifikator 10 sind jeweils durch eine entsprechende Recheneinheit implementiert und in die Steuereinheit 32 integriert. Vorliegend ist das Hörgerät 2 ausgebildet zum Ausgleich eines Hördefizits des Nutzers 4 und weist hierzu eine nicht näher gezeigte Verstärkungseinheit auf, welche ebenfalls in die Steuereinheit 32 integriert ist.

### Bezugszeichenliste

- 2: Hörgerät
- 4: Nutzer
- 6: Umgebungsgeräusch
- 8: Geräuschunterdrückung
- 10: Klassifikator
- 12: Mikrofon
- 14: Eigenstimmenerkennung
- 18: Speicher
- 20: äußeres Mikrofon
- 22: Gehäuse
- 24: inneres Mikrofon
- 26: externes Gerät
- 28: Hinweis
- 30: Hörer
- 32: Steuereinheit

- B1: leiser Bereich
- B2: lauter Bereich
- F: Funktion
- G: Grenz-SNR
- I: Istwert
- R: Ruhewert
- S: Sollwert
- SNR: Signal-zu-Rausch-Verhältnis
- S1: erster Schritt
- S2: zweiter Schritt
- S3: dritter Schritt
- U: Umgebung

## Patentansprüche

1. Verfahren zum Betrieb eines Hörgeräts (2) in einer aktuellen Umgebung (U),
- wobei eine Geräuschunterdrückung (8) des Hörgeräts (2) aktiviert ist, sodass Umgebungsgeräusche (6) für einen Nutzer (4) des Hörgeräts (2) reduziert werden,
- wobei für die aktuelle Umgebung (U) ein Sollwert (S) für die Sprachlautstärke des Nutzers (4) bestimmt wird,
- wobei ein Istwert (I) für die Sprachlautstärke des Nutzers (4) gemessen wird und hierzu ein Mikrofon (12) des Hörgeräts (2) verwendet wird,
- wobei, falls der Istwert (I) geringer ist als der Sollwert (S), von dem Hörgerät (2) eine Maßnahme durchgeführt wird, um den Nutzer (4) zu veranlassen, lauter zu sprechen, **dadurch gekennzeichnet, dass**
- die Umgebung (U) mittels eines Klassifikators (10) klassifiziert wird und einer Klasse zugeordnet wird,
- der Sollwert (S) bestimmt wird, indem dieser abhängig von der Klasse ausgewählt wird.

2. Verfahren nach dem vorhergehenden Anspruch,
wobei die Geräuschunterdrückung (8) eine aktive Störgeräuschunterdrückung ist.

3. Verfahren nach einem der vorhergehenden Ansprüche,
wobei der Sollwert (S) anhand einer Funktion (F) abhängig von einem Signal-zu-Rausch-Verhältnis (SNR) bestimmt wird, nämlich abhängig von dem Istwert (I) im Verhältnis zur Lautstärke der Umgebungsgeräusche (6), wobei die Funktion (F) derart ausgebildet ist, dass mit abnehmendem Signal-zu-Rausch-Verhältnis (SNR) ein größerer Sollwert (S) verwendet wird.

4. Verfahren nach dem vorhergehenden Anspruch,
wobei die Funktion (F) als Lombard-Anstiegskurve ausgebildet ist.

5. Verfahren nach einem der beiden vorhergehenden Ansprüche,
wobei oberhalb eines Grenz-SNR (G) als Sollwert (S) ein Ruhewert (R) verwendet wird, welcher einer mittleren Sprachlautstärke des Nutzers (4) in einer ruhigen Umgebung (U) entspricht und
wobei unterhalb des Grenz-SNR (G) ausgehend von dem Ruhewert (R) der Sollwert (S) anhand der Funktion (F) bestimmt wird.

6. Verfahren nach einem der vorhergehenden Ansprüche,
wobei der Istwert (I) bestimmt wird, indem die Sprachlautstärke mittels eines äußeren Mikrofons (20) des Hörgeräts (2) und in einer Eigenstimmenphase, in welcher der Nutzer (4) selbst spricht, gemessen wird.

7. Verfahren nach einem der vorhergehenden Ansprüche,
wobei der Istwert (I) bestimmt wird, indem die Sprachlautstärke mittels eines inneren Mikrofons (24) des Hörgeräts (2) im Ohrkanal des Nutzers (4) gemessen wird.

8. Verfahren nach einem der vorhergehenden Ansprüche,
wobei die Maßnahme umfasst, dass die eigene Stimme des Nutzers (4) an diesen mit verringerter Lautstärke ausgegeben wird.

9. Verfahren nach einem der vorhergehenden Ansprüche,
wobei die Maßnahme umfasst, dass die Geräuschunterdrückung (8) reduziert oder deaktiviert wird.

10. Verfahren nach einem der vorhergehenden Ansprüche,
wobei die Maßnahme umfasst, dass das Hörgerät (2) selbst oder mittelbar über ein externes Gerät (26) einen Hinweis (28) an den Nutzer (4) ausgibt, dass dieser zu leise spricht.

11. Verfahren nach einem der vorhergehenden Ansprüche,
wobei die Maßnahme umfasst, dass das Hörgerät (2) an den Nutzer (4) ein psychoakustisches Zusatzgeräusch ausgibt.

12. Verfahren nach einem der vorhergehenden Ansprüche,
wobei der Sollwert (S) ein erster Sollwert ist und
wobei von dem Hörgerät (2) eine Maßnahme durchgeführt, um den Nutzer zu veranlassen, leiser zu sprechen, falls der Istwert (I) größer ist als ein zweiter Sollwert.

13. Hörgerät (2), welches eine Geräuschunterdrückung (8), ein Mikrofon (12) und eine Steuereinheit (32) aufweist, welche ausgebildet ist zur Durchführung eines Verfahrens, bei welchem
- die Geräuschunterdrückung (8) des Hörgeräts (2) aktiviert ist, sodass Umgebungsgeräusche (6) für einen Nutzer (4) des Hörgeräts (2) reduziert werden,
- für eine aktuelle Umgebung (U) ein Sollwert (S) für die Sprachlautstärke des Nutzers (4) bestimmt wird,
- ein Istwert (I) für die Sprachlautstärke des Nutzers (4) gemessen wird und hierzu das Mikrofon (12) des Hörgeräts (2) verwendet wird,
- falls der Istwert (I) geringer ist als der Sollwert (S), von dem Hörgerät (2) eine Maßnahme durchgeführt wird, um den Nutzer (4) zu veranlassen, lauter zu sprechen,
**dadurch gekennzeichnet, dass**
- die Umgebung (U) mittels eines Klassifikators (10) klassifiziert wird und einer Klasse zugeordnet wird,
- der Sollwert (S) bestimmt wird, indem dieser abhängig von der Klasse ausgewählt wird.

## Claims

1. Method for operating a hearing aid (2) in a present environment (U),
- wherein a noise cancellation (8) of the hearing aid (2) is activated such that ambient noise (6) is reduced for a user (4) of the hearing aid (2),
- wherein a target value (S) for the voice volume of the user (4) is determined for the present environment (U),
- wherein an actual value (I) for the voice volume of the user (4) is measured using a microphone (12) of the hearing aid (2),
- wherein, if the actual value (I) is less than the target value (S), an action is performed by the hearing aid (2) to prompt the user (4) to speak louder,
**characterized in that**
- the environment (U) is classified by means of a classifier (10) and assigned to a class,
- the target value (S) is determined by selecting it depending on the class.

2. Method according to the preceding claim,
wherein the noise cancellation (8) is an active noise cancellation.

3. Method according to one of the preceding claims,
wherein the target value (S) is determined by means of a function (F) depending on a signal-to-noise ratio (SNR), namely depending on the actual value (I) in relation to the loudness of the ambient noise (6),
wherein the function (F) is in a form such that a larger target value (S) is used as the signal-to-noise ratio (SNR) decreases.

4. Method according to the preceding claim,
wherein the function (F) is a Lombard rise curve.

5. Method according to one of the preceding two claims,
wherein above a limit SNR (G) a quiescent value (R) is used as target value (S), said quiescent value (R) corresponds to an average voice volume of the user (4) in a quiet environment (U), and
wherein, below the limit SNR (G), the desired (S) is determined based on the function (F), starting from the quiescent value (R).

6. Method according to one of the preceding claims,
wherein the actual value (I) is determined by measuring the voice volume by means of an external microphone (20) of the hearing aid (2) and in an own-voice phase, in which the user (4) speaks himself or herself.

7. Method according to one of the preceding claims,
wherein the actual value (I) is determined by measuring the voice volume by means of an internal microphone (24) of the hearing aid (2) in the ear canal of the user (4).

8. Method according to one of the preceding claims,
wherein the measure comprises outputting the user's (4) own voice to the user at a reduced volume.

9. Method according to one of the preceding claims,
wherein the measure comprises reducing or deactivating the noise cancellation (8).

10. Method according to one of the preceding claims,
wherein the measure comprises that the hearing aid (2) itself or indirectly via an external device (26) outputs an indication (28) to the user (4) that he/she is speaking too softly.

11. Method according to one of the preceding claims,
wherein the measure comprises that the hearing aid (2) outputs an additional psychoacoustic sound to the user (4).

12. Method according to one of the preceding claims,
wherein the target value (S) is a first target value and
wherein an action is performed by the hearing aid (2) to prompt the user to speak more softly if the actual value (I) is greater than a second target value.

13. Hearing aid (2) comprising a noise cancellation (8), a microphone (12), and a control unit (32) adapted to perform a method, wherein
- the noise cancellation (8) of the hearing aid (2) is activated, so that ambient noise (6) is reduced for a user (4) of the hearing aid (2),
- a target value (S) for the voice volume of the user (4) is determined for a present environment (U),
- an actual value (I) for the voice volume of the user (4) is measured and the microphone (12) of the hearing aid (2) is used for this purpose,
- if the actual value (I) is lower than the target value (S), an action is performed by the hearing aid (2) to prompt the user (4) to speak louder.
- the environment (U) is classified by means of a classifier (10) and assigned to a class,
- the target value (S) is determined by selecting it depending on the class.

## Revendications

1. Procédé de fonctionnement d'un appareil auditif (2) dans un environnement courant (U),
- dans lequel une suppression de bruit (8) de l'appareil auditif (2) est activée, de sorte que les bruits ambiants (6) sont réduits pour un utilisateur (4) de l'appareil auditif (2),
- une valeur de consigne (S) pour le volume de la voix de l'utilisateur (4) étant déterminée pour l'environnement actuel (U),
- dans lequel une valeur réelle (I) pour le volume de la voix de l'utilisateur (4) est mesurée et un microphone (12) de l'appareil auditif (2) étant utilisé à cet effet,
- dans lequel, si la valeur réelle (I) est inférieure à la valeur de consigne (S), une action est effectuée par l'appareil auditif (2) pour amener l'utilisateur (4) à parler plus fort,
**caractérisé en ce que**
- l'environnement (U) est classifié au moyen d'un classificateur (10) et est attribué à une classe,
- la valeur de consigne (S) est déterminée en la sélectionnant en fonction de la classe.

2. Procédé selon la revendication précédente,
dans lequel la suppression de bruit (8) est une suppression active de bruit parasite.

3. Procédé selon l'une des revendications précédentes,
dans lequel la valeur de consigne (S) est déterminée à l'aide d'une fonction (F) en fonction d'un rapport signal/bruit (SNR), à savoir en fonction de la valeur réelle (I) par rapport à l'intensité sonore des bruits ambiants (6),
la fonction (F) étant conçue de telle sorte qu'une valeur de consigne (S) plus grande est utilisée lorsque le rapport signal/bruit (SNR) diminue.

4. Procédé selon la revendication précédente,
dans lequel la fonction (F) est conçue comme une courbe de montée de Lombard.

5. Procédé selon l'une des deux revendications précédentes,
dans lequel, au-dessus d'un RSN limite (G), une valeur de repos (R), qui correspond à un volume moyen de la voix de l'utilisateur (4) dans un environnement calme (U), est utilisée comme valeur de consigne (S), et dans lequel la valeur de consigne (S) est déterminée en dessous du SNR limite (G) à l'aide de la fonction (F) à partir de la valeur de repos (R).

6. Procédé selon l'une des revendications précédentes,
dans lequel la valeur réelle (I) est déterminée en mesurant le volume de la voix au moyen d'un microphone externe (20) de l'appareil auditif (2) et dans une phase de voix propre, dans laquelle l'utilisateur (4) parle lui-même.

7. Procédé selon l'une des revendications précédentes,
dans lequel la valeur réelle (I) est déterminée en mesurant le volume de la voix au moyen d'un microphone interne (24) de l'appareil auditif (2) dans le conduit auditif de l'utilisateur (4).

8. Procédé selon l'une des revendications précédentes,
dans lequel la mesure comprend l'émission de la propre voix de l'utilisateur (4) vers celui-ci à un volume réduit.

9. Procédé selon l'une des revendications précédentes,
dans lequel la mesure comprend la réduction ou la désactivation de la suppression du bruit (8).

10. Procédé selon l'une des revendications précédentes,
dans lequel la mesure comprend la mesure que l'appareil auditif (2) lui-même ou indirectement par l'intermédiaire d'un dispositif externe (26) émet une indication (28) à l'utilisateur (4) que celui-ci parle trop bas.

11. Procédé selon l'une des revendications précédentes,
dans lequel la mesure comprend l'émission par la appareil auditif (2) d'un bruit psychoacoustique supplémentaire à l'utilisateur (4).

12. Procédé selon l'une des revendications précédentes,
dans lequel la valeur de consigne (S) est une première valeur de consigne et
dans lequel une action est effectuée par la appareil auditif (2) pour amener l'utilisateur à parler moins fort si la valeur réelle (I) est supérieure à une deuxième valeur de consigne.

13. Appareil auditif (2) comprenant une suppression de bruit (8), un microphone (12) et une unité de commande (32), qui est conçue pour exécuter un procédé, dans lequel
- la suppression de bruit (8) de l'appareil auditif (2) est activée, de sorte que les bruits ambiants (6) sont réduits pour un utilisateur (4) de l'appareil auditif (2),
- pour un environnement actuel (U), une valeur de consigne (S) est déterminée pour le volume de la voix de l'utilisateur (4),
- une valeur réelle (I) est mesurée pour le volume de la voix de l'utilisateur (4) et le microphone (12) de l'appareil auditif (2) est utilisé à cet effet,
- si la valeur réelle (I) est inférieure à la valeur de consigne (S), une action est effectuée par l'appareil auditif (2) pour amener l'utilisateur (4) à parler plus fort.
- l'environnement (U) est classifié au moyen d'un classificateur (10) et est attribué à une classe,
- la valeur de consigne (S) est déterminée en la sélectionnant en fonction de la classe.
